# EUROPEAN PATENT SPECIFICATION

(11) **EP 2 585 950 B1**
(45) Date of publication and mention of the grant of the patent: **07.06.2023**
(21) Application number: 11798432.8
(22) Date of filing: 24.06.2011
(51) Int. Cl.: G06F 8/30, G06F 9/48, G06F 16/245, G06F 16/2453, G06F 16/2455

(54) **APPARATUS AND METHOD FOR DATA STREAM PROCESSING USING MASSIVELY PARALLEL PROCESSORS**
VORRICHTUNG UND VERFAHREN ZUR DATENSTROMVERARBEITUNG MITHILFE MASSIV PARALLELER PROZESSOREN
APPAREIL ET PROCÉDÉ DE TRAITEMENT DE FLUX DE DONNÉES À L'AIDE DE PROCESSEURS MASSIVEMENT PARALLÈLES

(30) Priority: 26.06.2010 PT 10517410
(43) Date of publication of application: 01.05.2013
(73) Proprietor: Feedzai - Consultadoria e Inovação Tecnológica, S.A., 3030-199 Coimbra (PT)
(72) Inventor: PIMENTA MARQUES, Paulo Jorge, 3030-199 Coimbra (PT); RODRIGUES BIZARRO, Pedro Gustavo Santos, 3030-199 Coimbra (PT); SIMÕES FERREIRA, Ricardo José, 3030-199 Coimbra (PT); PEREIRA DA PUREZA, Luis Filipe Da Silva, 3030-199 Coimbra (PT)
(74) Representative: Patentree
(86) International application number: PCT/PT2011/000021
(87) International publication number: WO 2011/162628

(56) References cited:
- TSAKALOZOS K ET AL: "Using the Graphics Processor Unit to Realize Data Streaming Operations", Proc. of the 6th Middleware Doctoral Symposium (MDS 2009), Urbana Champaign, IL, US, 2009, XP002673701, Retrieved from the Internet: URL:http://cgi.di.uoa.gr/~kt/ [retrieved on 2012-04-10]
- GOVINDARAJU N K ET AL: "Efficient Relational Database Management using Graphics Processors", ACM Workshop on Data Management on New Hardware, 2005, XP002673702, Retrieved from the Internet: URL:http://www.cs.unc.edu/~naga/research.h tml [retrieved on 2012-04-10]
- HE B ET AL: "Relational Query Coprocessing on Graphics Processors", ACM TRANSACTIONS ON DATABASE SYSTEMS, vol. 34, no. 4, 1 December 2009 (2009-12-01), pages 21-1, XP009150443, ACM, NEW YORK, NY, US ISSN: 0362-5915, DOI: 10.1145/1620585.1620588 cited in the application
- WENJING MA ET AL: "AUTO-GC: Automatic translation of data mining applications to GPU clusters", 2010 IEEE INTERNATIONAL SYMPOSIUM ON PARALLEL&DISTRIBUTED PROCESSING, WORKSHOPS AND PHD FORUM (IPDPSW), 19 April 2010 (2010-04-19), pages 1-8, XP031680253, IEEE, PISCATAWAY, NJ, US ISBN: 978-1-4244-6533-0
- BINGSHENG HE ET AL: "Relational joins on graphics processors", PROCEEDINGS OF THE 2008 ACM SIGMOD INTERNATIONAL CONFERENCE ON MANAGEMENT OF DATA, 1 January 2008 (2008-01-01), page 511, XP55003093, New York, NY, USA DOI: 10.1145/1376616.1376670 ISBN: 978-1-60-558102-6
- WALKOWIAK S ET AL: "Exploring utilisation of GPU for database applications", PROCEDIA COMPUTER SCIENCE, vol. 1, no. 1, 1 May 2010 (2010-05-01), pages 505-513, XP027491953, ELSEVIER, AMSTERDAM, NL ISSN: 1877-0509, DOI: 10.1016/J.PROCS.2010.04.054

## Description

### Technical domain of the invention:

The present invention relates to a data stream processing apparatus that uses Graphics Processing Units (GPUs) to speed up data stream processing.

Additionally, the present invention also dynamically generates code in a Generic Purpose GPU (GPGPU) Application Programming Interface language (such as OpenCL or CUDA) such that the resulting code has very few program control instructions allowing much more unrestricted parallelization by the GPU.

The apparatus and method of the present invention are useful in applications that require high performance and speed in data analysis, such as monitoring applications in financial systems, telecommunications, energy and utilities distribution or consumption, manufacturing, traffic analysis and control, computer network and security management, real-time data warehousing, or clickstream analysis.

### Background of the invention:

Data streams are unbounded sequences of data items that arrive continuously at data processing engines such as Data Stream Management Systems (DSMS), Complex Event Processing Systems (CEP), or Event Stream Processing Systems (ESP). Without any lack of generality, any and all of these engine types will be referred to simply as "engine" or "data processing engine". The incoming data items, commonly referred to as events, represent tuples of data with or without an associated timestamp. Examples of events include bank transactions, call-detailed-records for cell-phone companies, or sensor readings. These events can arrive at very high rates.

The data processing engine performs non-blocking versions of relational operations such as selection, projection, aggregation and joins over the incoming event streams using so called continuous queries. For operations that are normally blocking, such as aggregations or some types of joins, the non-blocking versions are obtained using moving windows.

In many scenarios, the input streams present very high throughputs and require low latency processing. Frequently, the engines struggle to keep up with the required performance.

Most of the traditional query-processing techniques are designed for CPU architectures. They focus on optimizations for single processors or multiple processors. However, there is also some work in using GPUs for query co-processing.

Graphics Processing Units, most commonly referred to as GPUs, are traditionally known for their role on 3D graphics rendering. However, recent technological advances made their computational power increase at a significant pace and GPUs are now multi-core processors, capable of highly data-parallel operations and very high data throughput.

In contrast to the CPU, GPUs devote more transistors to Arithmetic Logic Units (ALUs) and less to caches and flow control units. This makes GPUs highly effective for data-parallel computations with high arithmetic intensity. However, not all applications or algorithms can be parallelizable efficiently.

In fact, GPUs Single Instruction Multiple Thread (SIMT) architecture puts a heavy restriction on the programming model. This architectural model means that multiple threads perform concurrently the same instructions over the same data. As so, GPUs benefit data-parallel applications and not so much those that are difficult to parallelize and where frequent instruction branching occurs.

In addition, and contrary to most data processing engines in the literature, processing one event at a time or in small batches, e.g., up to a few hundred tuple batches, is not an efficient option for a GPU. Since a GPU is a highly parallel device, in order to fully exploit it, there is the need to process many thousands or millions of tuples at once, so that all the GPU threads are kept busy performing some work. Batching tuples is a simple process that potentially improves performance by increasing the parallelism available to the GPU.

Another technique to improve GPU performance is to use coalesced memory access. In coalesced memory access, threads access sequential memory addresses. In the Single Instruction, Multiple Thread model used by GPUs, the coalesced memory access is easier to achieve if tuples are represented in a column-oriented format because multiple threads accessing the same field in multiple tuples will access sequential addresses.

Tsakalozos et al., "Using the graphics processor unit to realize data streaming operations", in Proc. of the 6th Middleware Doctoral Symposium (MDS 2009), Urbana Champaign, IL, US, 2009, discloses a framework for processing data stream queries using GPU resources.

Fang et al. "Gpuqp: query co-processing using graphics processors. In SIGMOD '07: Proceedings of the 2007 ACM SIGMOD international conference on Management of data, pages 1061-1063, New York, NY, USA, 2007. ACM." used the GPU as a query coprocessor for three database operations: Sorting, tree indexing, and joins, leaving operations such as selection, projection and aggregations to be performed by the CPU. Their GPU implementation used the CUDA platform, which shows limited performances. Unlike this work, the apparatus of the present invention performs expression evaluations, selections, aggregations and joins and re-writes the physical execution plan using a GPGPU API (such as OpenCL) to remove control flow instructions from the code, thereby allowing for better parallelization and increased performance.

Naga et al. "Fast computation of database operations using graphics processors. In SIGMOD '04: Proceedings of the 2004 ACM SIGMOD international conference on Management of data, pages 215-226, New York, NY, USA, 2004." presented some algorithms for fast query co-processing using the GPU, namely predicate evaluation, Boolean combination and aggregations. However they used the graphics pipeline directly, using the textures to represent data on the GPU and process it using pixel and vertex shaders. Since these are very low-level data processing primitives, they impose severe limitations on the programming model: (i) first, composing data processing operations using those low level primitives such as pixel and vertex shaders is complex, error prune, and not very efficient; and (ii) second, having several low level operators prevents the use of fewer control instructions. This process is no longer practical due new development platforms. The new platforms are more programmer-friendly, provide many more features, and are designed to take the most out the modern GPU capabilities.

Bingsheng et al. "Relational query coprocessing on graphics processors. ACM Trans. Database Syst., 34(4):1-39, 2009." discloses the implementation of a number of different basic primitives such as scatter and gather, prefix-sum and map, and use them to implement common relational query processing algorithms. Each primitive explores the GPU hardware features, especially the high thread parallelism. With this design, they are able to perform some operations such as selection and projection by using a set of these primitives. For example, in order to do a selection, the data has to be processed in three steps, where the map, prefix-sum and prefix-scatter primitives are used. However, that work was for databases and non-streaming data, while the proposed apparatus is targeted at streaming data. In addition, by using dynamic code generation, it is greatly reduced the use of control flow instructions to connect all those low level primitives. Instead, the present invention has pre-defined kernels (i.e., higher-order primitives) that are used to build the equivalent code but with much fewer procedure calls and control flow instructions.

In short, the disadvantages of the above mentioned methods include building executing plans, which by using low level primitives, end up having many control flow instructions and procedure calls, do not optimize GPU code for coalesce memory accesses or do not optimize the transfer of data between the CPU and the GPU and vice-versa.

Thus, in order to overcome said disadvantages, it is an object of the present invention to provide an apparatus that optimizes the relational operations over incoming data streams using Graphics Processing Units to speed up data stream processing.

It is now been found that the above mentioned disadvantages can be addressed when modules dynamically create execution plans with very few control flow instructions (using a general purpose GPU API such as OpenCL or CUDA), when they transform the incoming tuples from a row-based tuple-by-tuple format to a column-oriented architecture, and when the communication between CPU and GPU is re-arranged to be throughput-optimized by sending tuples in very large batches.

According to the invention, a method comprising the features of claim 1 and an apparatus comprising the features of claim 2 are proposed.

### General description of the invention:

The present invention relates to data stream processing apparatus that uses Graphics Processing Units (GPUs) to speed up data stream processing.

Said apparatus comprises:
a) A first module that parses and interprets stream processing queries and then builds a logic query plan consisting of logical operators connect in a tree or set of trees;
b) A second module that translates the logical query plan to a physical execution plan. But unlike the logical query plan (and unlike previous work), the generated physical execution plan is not composed of a tree of operators but instead consists in dynamically generated code with very few procedure calls and program control instructions. That physical plan is generated through a GPGPU API language such as OpenCL or CUDA. This strategy allows for better parallelism by allowing multiple GPU threads to operate in lockstep fashion (i.e., accessing the same instructions at the same time) more frequently;
c) A third module that transforms the incoming data stream tuples from a row-store or row-by-row format to a column-store or column-by-column format thereby allowing coalesced memory accesses. The third module also performs the data and control communication between the CPU and the GPU and back, such that tuples are sent in large batches, for better throughput.

OpenCL is an open source framework specification, which provides an API for parallel programming. Being an open standard, it is up to GPU vendors to implement and provide their own OpenCL compatible drivers. One of the main features of this invention is the possibility to compile GPU functions, usually called *kernels,* at runtime by dynamically generating OpenCL code with few program control instructions.

The generated OpenCL code can then be executed at a GPU, CPU, or any other OpenCL device.

Therefore, the apparatus of the present invention is able to optimize the data processing operations over incoming data streams using GPUs because it optimizes the code for GPU usage (having few control instructions allows better parallelism), optimizes the tuple data layout for improved GPU memory access (column-oriented, vector format allows the highly efficient coalesced memory access), and optimizes the data transfer between CPU and GPU (by using large batches).

As mentioned before, it is also an object of the present invention to provide a method to speed up data stream processing, comprising the following steps:
- Conversion of tuples into a column-oriented format to be streamed, written and read a single time;
- Implement the physical plan with as few kernels/functions and control flow instructions as possible;
- Implementation of selected operators using multiple-pass algorithms to improve and increase the efficiency of the performance; and
batch and send the tuples to and from the GPU using very large batches, in the order of thousands to millions.

Said method uses an OpenCL framework to generate code during compilation with much less program control instructions thus allowing much more unrestricted parallelization by the GPU. Additionally, it trades latency for throughput by batching tuples in very large sets (millions) and also converts the incoming tuple-by-tuple horizontal format to a column-store, vector-friendly format thus allowing to have a resulting performance much better than commercial products or equivalent code run on the CPU.

### Brief description of the figures:

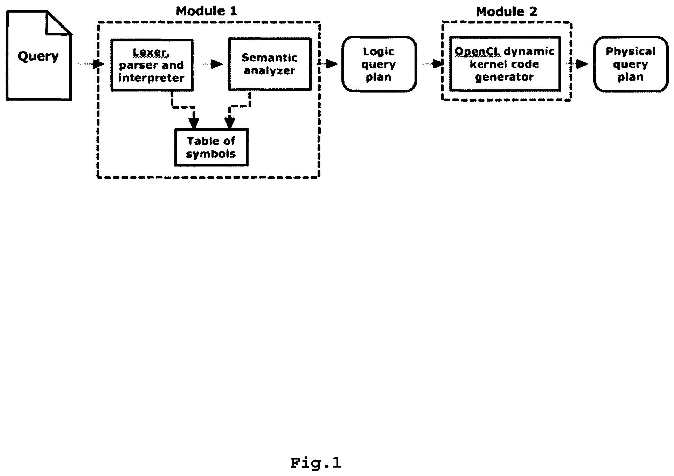

Fig.1 shows the transformation from query, to logical query plan, to physical query plan through the work of modules 1 and 2.

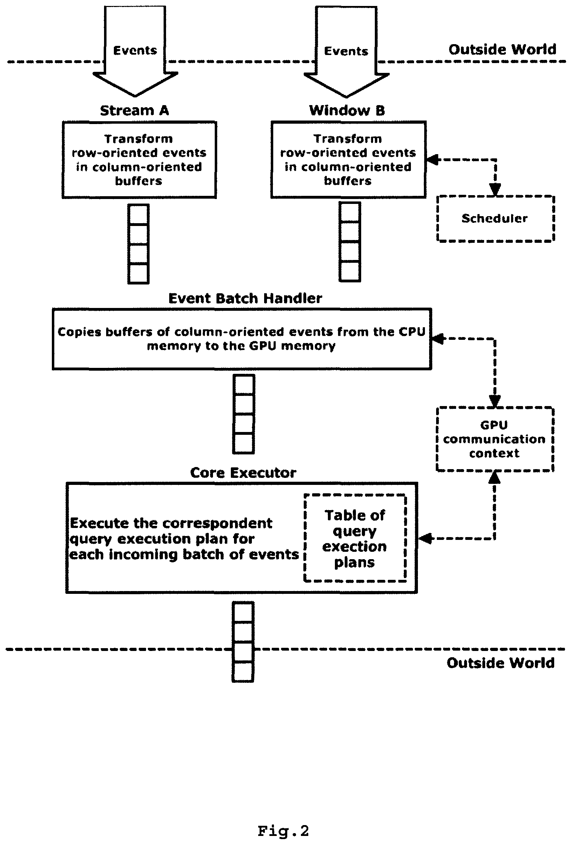

Fig. 2 shows the tasks of module 3, converting tuples from row-oriented events to column-oriented buffers, and copying events from the CPU memory to the GPU memory in large batches. The execution plans in the table of query execution plans in the core executor part contain the physical query plans produced by module 2. The "outside world" in the figure represents the world outside the engine.

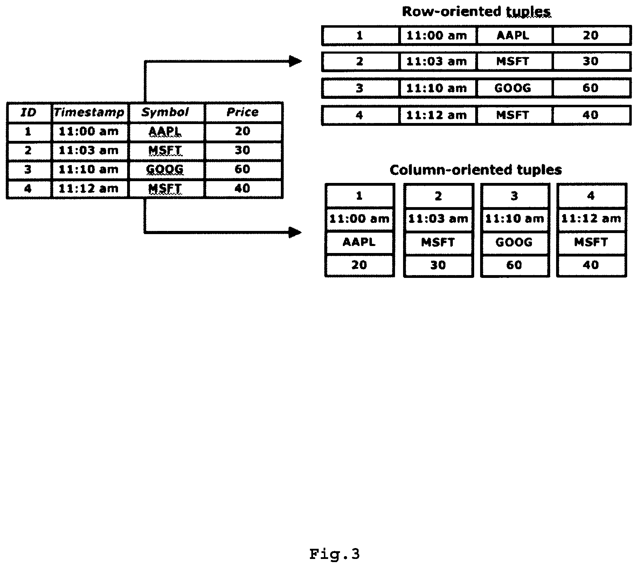

Fig.3 shows three tuples, with four attributes each, aX to dX, with X being the tuple number, from 1 to 3, in a row-oriented format (top) and in a column-oriented format (bottom). In the column-oriented format, parallel GPU threads accessing the same attribute in different tuples will access consecutive memory positions, and thus, will be performing the very efficient coalesced memory access pattern.

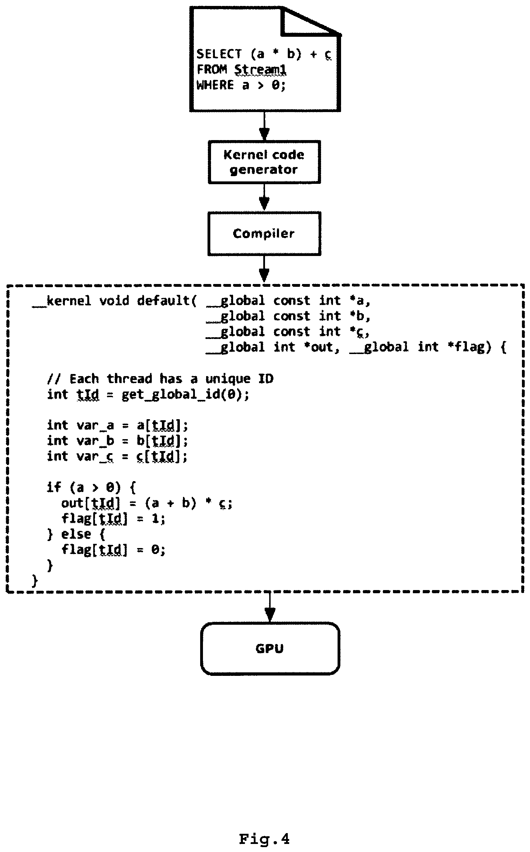

Fig.4 represents an example of OpenCL dynamic code generation. A traditional logical to physical translator would generate a physical plan with an operator for the selection operation (representing the WHERE clause), another for the projection operation (representing the SELECT clause), another one or more to evaluate the expression (a*b)+c, function calls between those operators, and code to handle exceptions and termination. That would represent tens of control flow instructions. In contrast, our approach generates a single procedure (no more function calls) and only two control flow instructions (if-else).

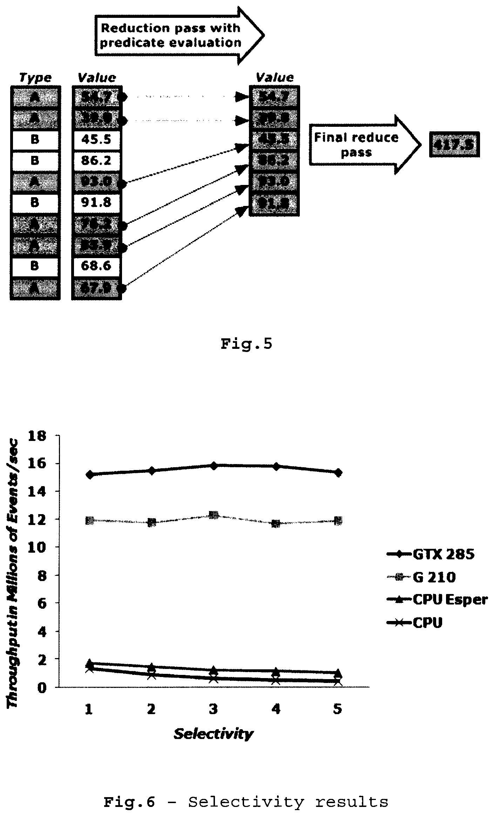

Fig.5 represents a group by aggregation for tuples where ID='A'. This is a visual example of the execution plan of this operator that highlights a process with little control flow instructions. In a first step, GPU threads filter out tuples where ID is different from 'A'. In a second step, the selected tuples are added together. Both steps are highly parallelizable and can be executed with GPU threads both synchronized and performing coalesced memory accesses.
Fig.6 represents the selectivity results of example 1. Not only the CPU throughput is much lower than the GPU throughput, it also worsens with higher selectivity values. At 10% selectivity (when only 10% of events pass the selection filter) the GPU is able to achieve a 8.9 times higher throughput, and at 90% it increases the difference to a 14.7 times higher throughput.

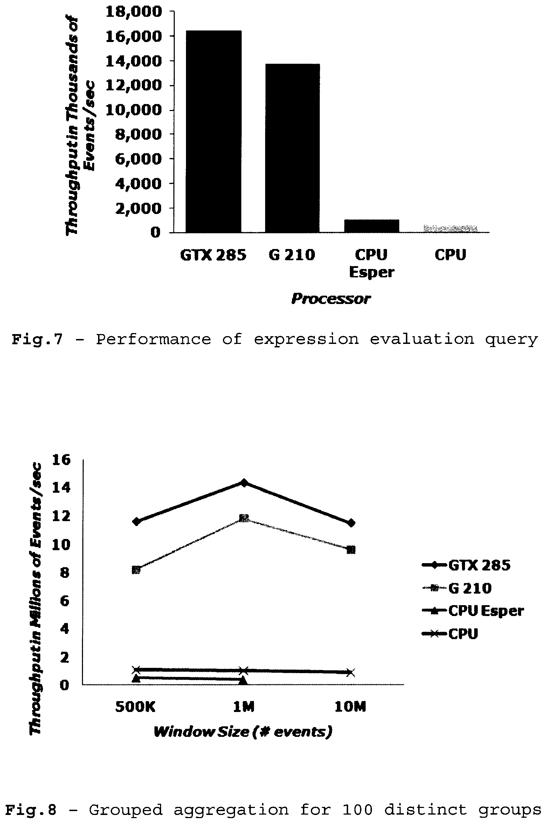

Fig.7 represents the performance of an expression evaluation query of example 2. Both GTX 285 and GeForce 210 GPUs performe around 16 and 13 times, respectively, higher throughput than the corresponding CPU implementations.

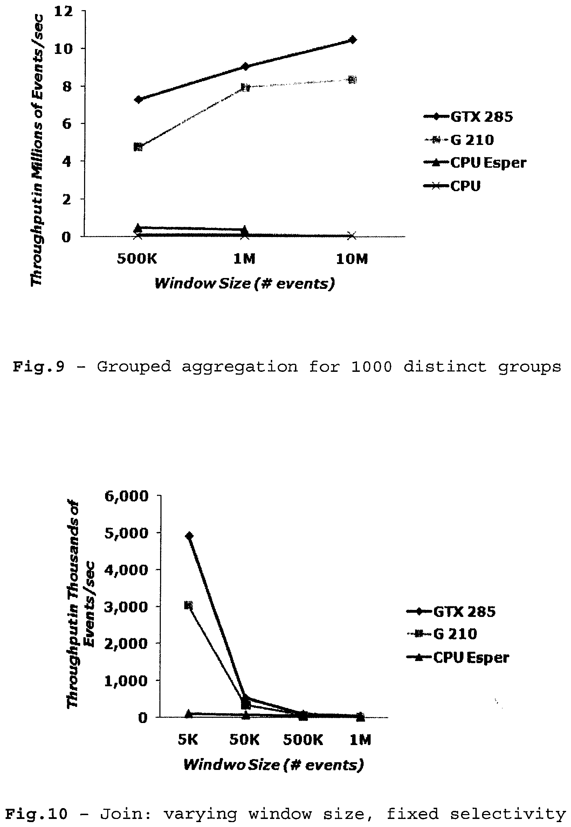

Fig.8 and Fig.9 show the performance of the aggregation queries of example 3. To access the performance of the example, where a SUM aggregation function was used in a group-by query, we performed the same test for two data sets, with 100 and 1000 distinct entities, represented by Fig.8 and Fig.9, respectively. For both tests, the two GPU processors show superior performance when compared to their CPU counterparts, achieving a performance between 20 and 40 times higher. However, the performance degradation when the number of distinct entities is increased is higher on both GPUs.

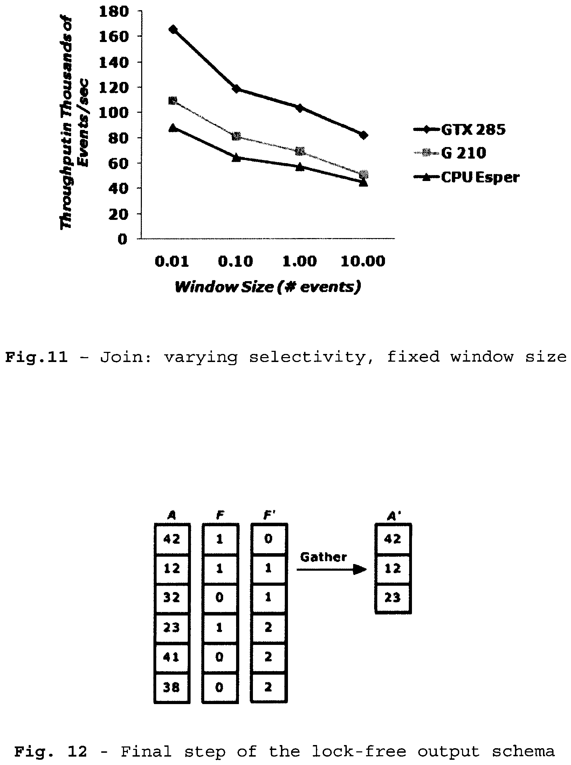

Fig.10 and Fig.11 show the performance of the stream-stream join queries.

### Detailed description of the invention:

The present invention relates to a data stream processing apparatus and a method that use Graphics Processing Units (GPUs) to speed up data stream processing.

For that, said apparatus comprises three modules. The first module parses and interprets stream processing queries and then builds a logic execution query plan.

The second module generates dedicated code that implements that logic query plan in a physical query plan by using a Generic Purpose GPU (GPGPU) application programming interface language (such as OpenCL or CUDA) and in a way such that the resulting query plan code has very few program control instructions and function calls allowing much more unrestricted parallelization by the GPU.

The third module transforms the incoming data stream tuples such that tuple attributes are accessed through a coalesced memory access (in coalesced memory access, threads access sequential memory addresses) by the GPU allowing for much better performance. The third module also performs the data and control communication between the CPU and the GPU and back, such that tuples are sent in large batches for better throughput. That is, the third module of the present invention trades latency for throughput by batching tuples in very large sets (thousands or millions) and also converts the incoming tuple-by-tuple or row-store horizontal format to a column-store, vector-friendly format. The resulting performance is orders of magnitude better than equivalent code run on the CPU or code running on the GPU without those improvements.

These features have the following effects:
i) convert tuples into a column-oriented format - although this format is often advised for OLAP scenarios, with read-only, read-frequently query loads,
ii) in the present invention tuples are streaming and are written and read a single time;
iii) the physical plan is not a tree of operators, but instead is implemented with as few kernels/functions and control flow instructions as possible;
iv) some operators are implemented using multiple-pass algorithms (e.g., group-by aggregations and joins) which turn out to be more efficient than single-pass algorithms; and
v) tuples are batched and sent to and from the GPU using very large batches (thousands to millions) instead of processing them as they arrive for decreased latency.

The result of implementing the above mentioned features, according to the present invention, is that the data processing and managing is performed with better throughput and efficiency, allowing its use in a wider range of applications.

### 1. Columns and batches in the GPU

As mentioned above, to fully exploit the GPU architecture, data processing operations should be done with nearly no control flow primitives, with large batches, and over column-oriented data flows. According to these principles, this invention was designed: i) to convert incoming row-oriented tuples into a column-oriented format; ii) to process tuples in large batches; and iii) to dynamically generate code at run-time with little control flow instructions.

Processing tuples in batches allows not only to hide some of the latency related to memory copies between the CPU and the GPU, but more importantly to take advantage of the data-parallel computational power of a GPU. Of course, by doing so, the latency in getting results will be higher than if the events were being processed one at a time but (as seen in the performance examples, later) throughput will be much higher, as thousands of threads in the GPU can process thousands of events at the same time.

As show in Fig.3 (bottom), a column-oriented tuple format keeps the same attribute of different tuples close together in memory. This allows the GPU to have threads accessing the device memory in a coalesced way¹.
¹NVIDIA CUDA Compute Unified Device Architecture - Programming Guide, version 1.1. (2007) Available at http://developer.download.nvidia.com/compute/cuda/1_1/NVIDIA_CUD A_Programming_Guide_1.1.pdf. Accessed June 2010

### 2. Dynamic code generation with OpenCL

Traditional GPU kernels tend to be implemented as generic operators. This characteristic allows them to support different types of queries (i.e., varied number of projected attributes, arbitrary arithmetic expression evaluation, different filtering conditions, etc). However, queries composed as a tree of operators will necessary have function calls and branches that should be avoided in GPUs. In contrast, in this invention, we use a GPGPU API language such as OpenCL to compile queries at runtime as a single kernel. With this process, queries are not composed of trees of operators but as tailor made, single kernels with very little branching.

Fig.4 depicts this behaviour with a very simple query translated to a single OpenCL kernel. Notice how the attributes are directly supplied to the kernel as function arguments. In OpenCL, each thread has a globally unique identifier, which we use to access the attributes of a single tuple. Moreover, we avoid unneeded dynamic expression evaluation, by computing the arithmetic expression directly in the function code.

### 3. GPU Implementation Details

As described below in the next sub-sections, the invention supports projections, selections, aggregations, grouping and joins.

### 4. GPU Implementation Details - Selections and Expressions

The relation operation "selection" is implemented using OpenCL's extensible dynamic code generation. Like selections, arithmetic expressions are very common operations in real-world queries. In CPU implementations, arithmetic expressions are trivially evaluated by recursively traversing the expression tree. However, due to the nature of the GPU architecture, recursion is not available. A possible way to overcome this problem would be to port the recursive algorithm to an iterative version using a stack data structure to simulate the recursion. However, as already mentioned, memory accesses to the GPU memory impose a very high overhead. Having a stack for each thread to evaluate its own tuple is even worse. Using each thread's local memory is also not a good solution due to size limit restrictions. Therefore, in this invention, arithmetic expressions are also coded directly in the kernel function's body using OpenCL's dynamic code generation.

### 5. GPU Implementation Details - Group By and Aggregations

This section explains how the invention computes Group-By aggregations such as the query below.

| | |
|---|---|
| **SELECT** | sum(value) |
| **FROM** | stream |
| **GROUP BY** | type; |
| | |
| Caption: | Group-by aggregation query |

The algorithm is a variation of the well-known class of parallel reduction algorithms².
² http://developer.download.nvidia.com/compute/cuda/1_1/Website/pr ojects/reduction/doc/reduction.pdf

At first sight, the proposed algorithm described below appears very inefficient: the Group-by aggregation query from above is evaluated as a series of queries such as the "Group-by aggregation query for a single value" query below where TYPE takes one of the values in the domain of type.

| | |
|---|---|
| **SELECT** | sum(value) |
| **FROM** | stream |
| **WHERE** | type=TYPE |
| **GROUP BY** | type; |
| Caption: | Group-by aggregation query for a single value |

There will be as many single-value query executions as the number of distinct values in the domain of type. That is, if the attribute type takes values 'A', 'B', 'C', and 'D', then aggregation query will be executed as a series of four queries with variable TYPE taking each of those values.

Furthermore, each single-value query is executed in a two-step algorithm. As seen in Fig.5, in the first step, called reduction pass, two attribute columns are read, and another intermediate, reduced, column is produced. For example, for TYPE='A', the reduced column contains only the values of attribute value for tuples where type='A'. The second and final step, the final aggregate step, takes the reduced intermediate column and computes the desired aggregation.

Again, this algorithm seems inefficient as it transforms what it could be single pass algorithm into an n*2 pass algorithm, with n=cardinality of the domain of the attribute of the group-by column. (Note that there is no data changes in the type and value arrays between successive reduction passes.) However, as shown in the performance evaluation section, this algorithm is orders of magnitude faster than the CPU version even for n=1000. This performance benefit is obtained because the GPU aggregation algorithm has essentially no branching, uses large batches, is able to use coalesced memory accesses (when multiple GPU threads access sequential memory addresses), and mainly accesses data in registers instead of memory. Together, these techniques mean that the GPU can parallelize the aggregation operations very efficiently in hundreds of GPU cores.

### 6. GPU Implementation Details - Joins

Our join implementation is based on the block Nested Loop Join (NLJ) normally used in database systems. This algorithm can be naturally mapped to the GPU. However, we adapted this algorithm to the GPU's architecture and limitations. That is, the algorithm was changed to take advantage of coalesced memory accesses, avoid control flow instructions, and synchronize threads. This means that our implementation of NLJ is not a straightforward port of the standard algorithm.

To overcome the mentioned issues, we make use of thread synchronization and fast access shared memory with work groups of threads.

Threads in OpenCL are organized in work groups, which can have between 1 and 512 threads. Within these groups, threads can synchronize among themselves and have access to a very fast on-chip memory-local memory. This memory however, is limited in size, only providing enough memory for cooperation of threads in each group.

In our implementation of the block NLJ, each thread is assigned a certain element from the R relation. Each work group then fetches from the global to local memory a block of the S relation. Finally, each thread in a work group simultaneously compares its assigned element from the R relation to each element of the block of S in local memory in the same loop. When that block of S is exhausted, the next block of S is loaded and the process is repeated. Note that in fact, this algorithm is executing N block NLJs in parallel (as many as the number of threads assigned to the R relation). By using a blocked pattern to compute the matches between both relations, we are taking advantage of the fast on-chip memory and also making our algorithm usable for relations with greater size than available GPU memory.

### 7. GPU Implementation Details - Lock Free Results's Buffers Compaction

Some operations, such as selection or join, do not output the same number of its input tuples. This implies that the buffering of resulting elements will be scattered. Thus, we need a parallel and efficient way of compacting the resulting output buffers, avoiding synchronization at all cost.

To overcome this, we need to perform an additional step before returning the final results' buffers, which is represented in Figure 12.

In each kernel that operates over the array of elements, we also make use of supporting array of flags. When a tuple is filtered or dropped, the flag is set to 0 (zero), or 1 otherwise.

This array of flags (we will refer to is as F), will then be processed using a prefix-sum algorithm. As depicted in Figure 12, the resulting array F' will contain sequential values for all the indexes with a positive flag (1) in the F array. Because index positions are 0-based, the first element of the array F is not taken into account for the prefix-sum algorithm, so that writing index positions in array F' start at 0 instead of the value at F[0].

Note however, that the first element of the array is not taken into account for the prefix-sum.

Taking both arrays *F* and *F'*, and the buffers corresponding to the attributes we will output (represented as *A* in Figure 12), each thread that reads a positive flag (1) in its corresponding index from array *F* will write the original value, that is stored in the same index in *A*, into a new array *A'* at the position represented by the value in *F'* in the same index. This final step is shown in Figure 13.

The resulting array *A'* will contain the compacted array of elements in the original array *A*.

### EXAMPLES:

The performance of the apparatus and method of the present invention were evaluated by running on two different GPUs and compared with an equivalent and optimized version for the CPU. The operations were performed to implement selection, projection, expression evaluations and GROUP-BY aggregations.

The tests were performed using the same operations in three different execution units in an otherwise identical machine:
- (CPU) INTEL CORE 2 Quad Q8400 at 2.66 Ghz, 8 GB memory;
- (G210) Nvidia GeForce 210 GPU with 16 CUDA cores, 589 MHz graphics clock, 500 MHz memory clock, 512 MB memory, 8 GB/sec memory bandwidth;
- (GTX285) Nvidia GeForce GTX 285 GPU with 240 CUDA cores, 648 MHz graphics clock, 1242 MHz memory clock, 1 GB memory, 159 GB/sec memory bandwidth.

The GPU code on G210 and GTX285 used the engine according to the present invention, taking advantage of batches, column-oriented tuple formats, and coalesced memory accesses as described before.

The CPU code implemented as standard model for comparison was based on algorithms tailored for the CPU. In addition to these three scenarios, the open source complex event processing engine Esper [http://esper.codehaus.org/] was also used. Esper only uses the CPU only to execute queries. As seen in the experiments, the CPU results are similar to those of Esper which shows that the implemented CPU is indeed on the same performance efficiency as this commonly used engine.

The dataset used was a synthetic stream of integers with between one and 20 attributes. The attributes were random integers in the domain [1, 100] except where otherwise stated. Each experimental data point represents an average of the performance of at least three runs.

Throughput was computed by processing 10 Million tuples and dividing that number of tuples by the total execution time. Execution time was measured as the elapsed time from the production of the first tuple to the reception of the last result. In the case of the GPU units, the execution time includes sending the tuples to the CPU, batching and sending values to the GPU, performing the operations, and communicating the results back to the CPU. Elapsed time does not include plan generation in either case.

The batch size, between the CPU and the GPU was 1 million tuples in all experiments.

The operations executed are selections (Example 1), arithmetic expressions (Example 2), aggregations over moving windows (Example 3) and joins (Example 4).

Projections were not evaluated because, in a column oriented format, they are trivially executed even before reaching the GPU-that is, projecting columns within the GPU is overhead only.

### Example 1 - Selections

The first experiment consists in a selection benchmark: a stream of five integer attributes is processed with different selectivities through a query of the form presented below:
**SELECT** a0,..., a4
**FROM** Stream1
**WHERE** a0 > K

### Caption: Selectivity query K was varied to enforce different selectivities

The results are summarized in Fig 6. Not only is the CPU throughput much lower than the GPU throughput, it also worsens with higher selectivity values. At 10% selectivity (when only 10% of tuples survive the selection filter) the GTX285 GPU processes 11.9 million tuples/sec while the CPU only processes ≈1.4 million tuples/sec (8.8 times higher throughput). At 90% the GTX285 GPU still processes 11.9 million tuples/sec but the CPU now is only able to process 0,45 million tuples/sec (26.3 times higher throughput).

### Example 2 - Arithmetic expressions

Another experiment evaluated the performance of simple arithmetic expressions using the query below:
**SELECT** (a+b)*c
**FROM** Stream1
**WHERE** a > 0

### Caption: Arithmetic expression query

As shown in Figure 7, the GTX 285 and G 210 GPU boards and code perform around 16 and 13 times respectively higher throughput than the CPU Esper or CPU combinations.

### Example 3 - Aggregations over moving windows

Another experiment evaluates aggregations over different sized windows, grouped by one of the tuple's attributes. To test different grouping selectivities the number of different entities was varied - represented by the attribute a0 in the following query:
**SELECT** a0, sum(a1)
**FROM** Stream1 **KEEP** [K **ROWS]**
**GROUP** BY a0

The results presented in Figs 8 and 9 do not show values for Esper using a Window size of 10 million rows. This is due to continuous *Out-Of-Memory* errors. In both these experiments, the two GPU Processors were clearly superior to their CPU counterparts, achieving a performance between 20 and 40 times faster. However, the performance degradation when the number of distinct groups is increased is higher on both GPUs. As kernels are implemented to aggregate a group at a time, more groups means that more kernels will be launched, resulting a small reduction on the performance. Also noteworthy, is how the GPU can process more tuples when the Window size growths from 500 thousand to 1 million rows.

### Example 4 - Joins

This benchmark compares our join algorithm in both GPU cards to Esper using queries such as the following:

| | |
|---|---|
| **SELECT** | S1.a0, S1.a1, S2.a1 |
| **FROM** | Stream1 **KEEP** [R **ROWS**] **AS** S1, |
| | Stream2 **KEEP** [R **ROWS**] **AS** S2 |
| **WHERE** | S1.a0 = S2.a0 |
| | |
| Caption: | Window-to-window Equi-join query |

We defined too different tests. The first has a fixed join selectivity, in which each tuple finds exactly one match, and the Window size varies in (5K, 50K, 500K and 1M).

As we can see in Figure 10, even though we are using a block NLJ, we still achieve higher throughput in both GPU cards. The GeForce GTX 285, having more processing units, manages to be superior to the GeForce 210. The lower results obtained as the Window size increases are mainly due to algorithm-bound limitations.

The second test, with results shown in Figure 11, maintains a fixed sized window of 500K rows, and varies the join selectivity. This means that the uniform distribution for the join attribute takes the values of 50K, 500K, 5M and 50M. Therefore each attribute finds in average 10, 1.0, 0.1 and 0.01 matching events.

As expected, when the number of matching tuples is higher the throughput decreases. More matching tuples means that more result output need to be resolved, thus degrading the performance. Still, we clearly the see a performance of about 2 times faster, achieving a throughput of 90 thousand tuples/second even for a considerable high selectivity on the GTX 285.

## Claims

1. A computer implemented method to optimize relational operations over incoming data streams using Graphics Processing Units, GPUs, from an initial stream processing query to final results, comprising the following steps:
- parsing and interpreting the stream processing query, and building a logic query plan consisting of logical operators connected in a tree or set of trees;
- implementing a physical plan by translating the logic query plan into a physical execution plan using a dynamic kernel code generator, said physical plan comprising a single kernel arranged for performing coalesced memory access and arranged for computing arithmetic expressions directly in the generated kernel code;
- implementing selected operators using multiple-pass to improve and increase efficiency;
- converting incoming tuples from a row-oriented format into a column-oriented format; and
- sending the converted tuples to and from the GPU in batches.

2. A data stream processing apparatus comprising means arranged for carrying out the method of claim 1.

## Patentansprüche

1. Ein computerimplementiertes Verfahren zur Optimierung von Vergleichsoperatoren bei eingehenden Datenströmen mithilfe von Grafikprozessoren (GPUs), von der ersten Verarbeitungsanfrage des Datenstroms bis zu den Endergebnissen, umfassend die folgenden Schritte:
- Parsen und Auswerten der Verarbeitungsanfrage des Datenstroms und Erstellen eines logischen Auswertungsplans, bestehend aus logischen Operatoren, die in einem Operatorbaum oder einer Reihe von Operatorbäumen verbunden sind;
- Implementieren eines physischen Plans durch Übersetzen des logischen Auswertungsplans in einen physischen Ausführungsplan unter Verwendung eines dynamischen Kernelcode-Generators, wobei der genannte physische Plan einen einzelnen Kernel umfasst, der so angeordnet ist, dass er den Zugriff auf miteinander verbundene Speicher sowie die Berechnung arithmetischer Ausdrücke direkt in dem erzeugten Kernelcode ermöglicht;
- Implementieren ausgesuchter Operatoren unter Verwendung eines Multi-Pass-Verfahrens zur Verbesserung und Steigerung der Effizienz;
- Umwandeln eingehender Tupel aus einem zeilenorientierten Format in ein spaltenorientiertes Format; und
- Senden der umgewandelten Tupel in Batchs an und von dem Grafikprozessor.

2. Eine Vorrichtung zur Datenstromverarbeitung, umfassend Mittel zur Durchführung des Verfahrens nach Anspruch 1.

## Revendications

1. Un procédé implémenté par ordinateur pour optimiser les opérations relationnelles sur des flux de données entrants en utilisant des Unités de Traitement de Graphique, GPUs, d'une requête de traitement de flux initiale aux résultats finaux, comprenant les étapes suivantes :
- analyser et interpréter la requête de traitement de flux, et élaborer un plan de requête logique consistant en opérateurs logiques connectés dans un arbre ou ensemble d'arbres ;
- mettre en place un plan physique en traduisant le plan de requête logique en un plan d'exécution physique utilisant un générateur de code de kernel dynamique, ledit plan physique comprenant un unique kernel arrangé pour effectuer un accès à la mémoire unifié et arrangé pour calculer des expressions arithmétiques directement sur le code de kernel généré ;
- implémenter les opérateurs sélectionnés en utilisant une approche multipasse pour améliorer et augmenter l'efficacité ;
- convertir les tuples entrants d'un format orienté vers les lignes vers un format orienté vers les colonnes ; et
- envoyer les tuples convertis en et à partir du GPU par lots.

2. Un appareil de traitement de flux de données comprenant des moyens arrangés pour exécuter le procédé de la revendication 1.
